# EUROPEAN PATENT APPLICATION

(11) **EP 4 632 247 A1**
(43) Date of publication of application: **15.10.2025**
(21) Application number: 24168979.3
(22) Date of filing: 08.04.2024
(51) Int. Cl.: F16F 9/34, F16F 9/512

(54) **A VALVE ARRANGEMENT FOR REGULATING DAMPING FLUID FLOW IN A SHOCK ABSORBER**

(71) Applicant: Öhlins Racing AB, 194 27 Upplands Väsby (SE)
(72) Inventor: DANEK, Magnus, 186 92 Vallentuna (SE)
(74) Representative: AWA Sweden AB

(57) **Abstract**

The disclosure relates to a valve arrangement (100, 200) for regulating damping fluid flow in a shock absorber. The valve arrangement comprising a valve body (110, 210) providing a first inlet (114, 214), a second inlet (115, 215), a first outlet (116, 216), and a second outlet (117, 217). The valve arrangement (100, 200) further comprises a valve member (120, 220) adapted to be moveable relative the valve body (110, 210) between a first position and a second position, a first restriction (R1) along a first flow path (F1) connecting the first inlet (114, 214) and the first outlet (116, 216), and a second restriction (R2) along a second flow path (F2) connecting the second inlet (115, 215) and the second outlet (117, 217). The valve arrangement (100, 200) is adapted so when the valve member (120, 220) is in the first position the first restriction (R1) is open and the second restriction (R2) is closed or biased to be closed, and when the valve member (120, 220) is in the second position the second restriction (R2) is open and the first restriction (R1) is closed or biased to be closed.

## Description

### TECHNICAL FIELD

The present application relates to a valve arrangement for regulating a damping fluid flow in a shock absorber, a shock absorber incorporating the same, and a method for regulating a damping fluid flow in a shock absorber.

### BACKGROUND

Shock absorbers are designed for use in vehicles to absorb and damp shock impulses to improve ride comfort and performance. Shock absorber typically incorporate one or more valve arrangements to regulate damping fluid flow during compression stroke and/or rebound stroke of the shock absorber. By tuning the properties of the valve arrangement, for instance an opening pressure for a valve arrangement in a particular stroke direction, one can adjust the shock absorber's damping characteristic. However, a drawback of such valve arrangements is that the valve arrangements may fail to operate as intended due to unpredictable stroke transition events such as suction effect which may prevent a valve arrangement from opening at an intended opening pressure.

Accordingly, there exists a need for a solution for improving shock absorber performance.

### SUMMARY

It is an object of the present disclosure to provide an improved solution that alleviates at least some of the mentioned drawbacks with the prior art. A first object is to provide a valve arrangement for improving responsiveness of regulating damping fluid flow in a shock absorber. A second object is to provide a shock absorber comprising such a valve arrangement. A third object is to provide a method of damping fluid flow in a shock absorber for improving responsiveness. Preferred embodiments are set forth in the dependent claims. To achieve at least one of the above objects, and also other objects that will be evident from the following description, a valve arrangement, shock absorber comprising a valve arrangement, and a method is provided.

Shim stacks may be used in shock absorbers to act as a regulating valve for compression/rebound. A drawback of shim stacks is that an initial force is required for generating an initial displacement, and thus an opening of the shim stack. Thereby, damping fluid pressure needs to build up to an initial pressure which, when reaching a threshold value, will displace shims of the shim stack enough for it to open. This initial pressure build-up will cause an unwanted initial stick which causes pistons to stick momentarily when changing stroke direction. Further, the pressure build-up is, after the shim stack opens, causing an unwanted initial acceleration of damping fluid flow and thereby an undesirable acceleration of the piston. This undesired acceleration must be dampened by the shock absorber which causes a reduction of its damping performance and responsiveness. Other types pressure regulated valves may receive similar problems because of the initial pressure build-up required for opening them.

The inventive concept of the disclosure is based on the insight that responsiveness of a shock absorber may be improved by incorporating a new valve arrangement, wherein said new valve arrangement provides adjustable restrictions for regulating compression flow and rebound flow, wherein the restriction adjustment is coupled by means of a valve member adapted for enabling coupled regulation via respective restrictions. In one instance, when a piston of a shock absorber moves in direction as a result of a compression stroke, the valve member opens a first restriction which regulates compression flow, whereas closes a second restriction which regulates rebound flow. When the piston changes stroke direction, for example when transitioning to a rebound stroke, the valve member may be caused to move in response to pressure, thereby moving in a direction coinciding with an opening direction of the second restriction regulating rebound flow and a closing direction of the first restriction regulating compression flow.

According to a first aspect of the disclosure, there is provided a valve arrangement for regulating damping fluid flow in a shock absorber, the valve arrangement comprises a valve body providing a first inlet, a second inlet, a first outlet, and a second outlet. The valve arrangement further comprises a valve member adapted to be moveable relative the valve body between a first position and a second position, a first restriction along a first flow path connecting the first inlet and the first outlet, and a second restriction along a second flow path connecting the second inlet and the second outlet. The valve arrangement is adapted so when the valve member is in the first position the first restriction is open and the second restriction is closed or biased to be closed, and when the valve member is in the second position the second restriction is open and the first restriction is closed or biased to be closed. The valve arrangement may thereby advantageously be used to regulate damping fluid flow in a shock absorber. When used for regulating fluid flow in a shock absorber, the valve arrangement is arranged such that compression flow flows through one of the first and second flow path and rebound flow flows through the other of the first and second flow path. As a nonlimiting example, the valve arrangement may be arranged such that compression flow flows through the first flow path and rebound flow flows through the second flow path. By compression flow, it may be meant damping fluid that, during a compression stroke, flows from a compression chamber of a shock absorber to a rebound chamber of a shock absorber. By rebound flow, it may be meant damping fluid that, during a rebound stroke, flows from the rebound chamber of a shock absorber to the compression chamber of a shock absorber.

The valve arrangement as disclosed herein is, thanks to its ability to couple the regulation of compression and rebound flow, able to overcome drawbacks relating to poor timing of regulating the compression and rebound flow. Examples of problems relating to poor timing of regulating the compression and rebound flow may be that compression and rebound valves of a shock absorber are simultaneously and undesirably open or closed, which may cause poor performance of the shock absorber.

Further, when used in a shock absorber, coupling regulation of the compression flow and rebound flow is advantageous for avoiding that both flows are simultaneously closed. A drawback of a shock absorber using independently acting compression and rebound valves is that when the shock absorber changes from the compression stroke to the rebound stroke, the opening the rebound valve may lag in respect of the closing of the compression valve. Thereby, if the compression valve and the rebound valve are simultaneously closed, a piston of that shock absorber may experience an initial sticking or locking effect at the beginning of the rebound stroke, which causes poor performance of the shock absorber. This drawback is overcome by the valve arrangement as disclosed herein.

The valve arrangement may be further advantageous because it may be designed such to provide a piston of a shock absorber with a smooth transitional motion from the compression stroke to the rebound stroke without a step or a gap. By step it may be meant that the piston momentarily sticks when transitioning from moving in the compression direction to the rebound direction, which is undesired. By gap it may be meant that the piston receives an undesired movement or acceleration when transitioning from the compression direction to the rebound direction, which is undesired. The valve arrangement as disclosed herein allows for that the compression valve closes while the rebound valve simultaneously opens, or vice versa, which enables the piston, when transitioning from compression to rebound, to continuously move so to absorb force without experiencing a step or gap. This is advantageous for improving the effectiveness of the shock absorber.

By the second restriction being biased to be closed when the valve member is in the first position, it may be meant that the valve arrangement is adapted with a biasing means, such as a spring, to generate a closing of the second restriction when the valve member is in the first position. This may advantageously enable damping fluid to flow through the second flow path when the valve member is in the first position, for as long as fluid pressure in the second inlet is higher than fluid pressure in the second outlet. The same references as above may be made to the first restriction being biased to be closed when the valve member is in the second position. In the context of the application, by the valve member being moveable between a first position and a second position, it may be meant that the valve member is moveable to the first position and moveable to the second position. Additionally, the valve member may be movable to any position between the first position and the second position. The first position and/or the second position may be axial end position(s) of the movement range of the valve member.

According to one embodiment, the valve member is moveable relative the valve body within a first range to increase a flow-through cross-section of the first restriction when moving in the first direction and reduce the flow-through cross-section of the first restriction when moving in the second direction, and the valve member is moveable within a second range to reduce a flow-through cross-section of the second restriction when moving in the first direction and increase the flow-through cross-section of the second restriction when moving in the second direction.

This is advantageous because the valve member is capable of regulating the first and second flow path by a movement in a single direction. This because when the valve member moves for generating a closure of the first flow path, the valve member is, by the same movement, generating an opening of the second flow path. Thereby, the momentum of the valve member that generates a closure of the first flow path, also generates an opening of the second flow path. This is advantageous because the valve member is already moving before opening the second flow path reducing the risk of an initial stick or suction effect on a piston when a shock absorber changes stroke direction. This is further advantageous for promoting that the transitional movement of the piston when changing stroke direction is smooth without causing unwanted stick or acceleration.

According to one embodiment of the present disclosure, the first range and the second range overlaps so that for an overlapping range, respective flow-through cross-sections of the respective first and second restrictions are open. This is advantageous since the valve arrangement will, for the overlapping range, regulate the first restriction of the first flow path to increase and the second restriction of the second flow path to decrease, or the other way around. This facilitates a smooth transition between compression and rebound. Further, since at least one of the first flow path or the second flow path is open, damping fluid may always be able to pass through the valve arrangement. This is advantageous for removing the risk of the first and second flow path to be simultaneously closed, causing the piston of the shock absorber to stick due to that both the compression and rebound flows are closed.

According to one embodiment of the present disclosure, the valve member is moveable in the first direction and the second direction at least in response to pressure. The valve member being movable at least in response to pressure is advantageous since it enables it to automatically adjust the first restriction of the first flow path and the second restriction of the second flow path in response to pressure changes in the shock absorber.

According to one embodiment of the present disclosure, the valve member is adapted to move relative the valve body in response to a pressure differential between hydraulic fluid in a compression chamber of a shock absorber and hydraulic fluid in a rebound chamber of a shock absorber. The valve arrangement is advantageously arranged such that the first inlet is fluidly connected to a compression chamber of the shock absorber and the second inlet is fluidly connected to a rebound chamber of the shock absorber. Thereby, fluid pressure in the compression chamber and rebound chamber will be substantially transferred to the first and second inlet, respectively. The valve arrangement is advantageously adapted such that the valve member is moveable in response to a pressure differential between the compression and rebound chambers. By "fluidly connected" or the like, it may be meant that an element A and an element B are arranged such that fluid communication is established between element A and element B, not that an element A is free-floating relative element B. Moreover, the same may be meant "fluidly arranged".

According to one embodiment, the valve member comprises a first valve member portion and a second valve member portion. When the valve member is in the first position, the second valve member portion is adapted to close the second restriction, and when the valve member is in the second position, the first valve member portion is adapted to close the first restriction. The first valve member portion and the second valve member portion are advantageous rigid so to prevent fluid from passing through the first flow path, respective the second flow path.

According to one embodiment, the first valve member portion and the second valve member portion are fixedly coupled to each other by means of a coupling valve member portion. The coupling valve member portion is beneficial for transferring the pressure differential between hydraulic fluid in the first and second inlets into a motion of the valve member in relation to the valve body. The coupling valve member portion is preferably rigid. Further, the coupling valve member portion is advantageously exposed to fluid pressure in the first inlet and the second inlet and may as a result of the pressure differential between the generate a movement of the valve member. The first and second valve member portions are advantageously fixedly coupled with the coupling valve member portion so that the valve member can effectively regulate the first restriction and the second restriction in response to the pressure differential between the first inlet and the second inlet.

According to one embodiment of the valve arrangement the first valve member portion and the second valve member portion are movable relative each other and relative a coupling valve member portion. This has the advantage of providing an alternative way of constructing the valve element.

According to one embodiment, the coupling valve member portion is arranged to be in fluid connection to the first inlet and the second inlet. This is advantageous for enabling the valve member to move in the first direction and the second direction in response to the pressure differential between the first inlet and the second inlet.

According to one embodiment of the present disclosure, one or more springs for returning the valve member from the first or second position to an equilibrium position. Adding a spring is beneficial for mechanically adjusting the position of the valve member in relation to the valve body. A first spring may be used to apply force on the valve member towards the equilibrium position. The equilibrium position may be a position between the first and second position of the valve member. Thereby, the spring may promote the valve member to move towards the equilibrium position. The valve body may be controlled by two or more springs. Thereby each spring may have a specific stiffness or may only affect the valve member by a force within a specific movement-range. Using multiple springs may be advantageous for enabling the valve arrangement to be adjusted so to promote a specific movement behavior. For example, the valve member could move relatively fast when moving from the first to the second position, and relatively slow when moving from the second to the first position, and vice versa. Adding at least one spring is further advantageous for enhancing movement of the valve member in either the first or second direction for reducing face lag. The valve arrangement comprising one or more springs may be advantageous for pre-tensioning the valve member in the equilibrium position.

According to one embodiment of the present disclosure, the valve member is adapted as a sleeve axially moveable relative the valve body, and the first and second restrictions are formed by a first and second aperture for fluidly connecting to the first and second outlet. This is advantageous since the design allows the valve arrangement to provide a greater variety in designs and shapes of the restrictions. For instance, the sleeve may be axially moveable or be rotationally movable about an axis. Moreover, when the valve member is adapted as a sleeve it may be more easily manufactured. Being adapted as a sleeve however only relates to a general shape and does not limit it from comprising other geometric shapes such as the partition element previously mentioned.

According to one embodiment of the present disclosure, the valve arrangement is adapted to be arranged in the piston of the shock absorber. During a compression stroke, the piston may compress the compression chamber and expand the rebound chamber. The valve arrangement may then be adapted to transport damping fluid from the compression chamber to the rebound chamber. Thus, it is advantageous to place the valve arrangement inside the piston for it to have close access to the compression chamber and the rebound chamber.

According to one embodiment of the present disclosure, the valve member is adapted to be further controllable by a control signal. The movement of the valve member into its first position or second position may be enhanced or hindered by electro-mechanical means for promoting regulation of compression flow and/or rebound flow. For example, the shock absorber may be intended to not switch between compression and rebound flow faster than a pre-set value. Another example may be that the shock absorber is intended to promote compression flow over rebound flow. Further, the speed of the movement of the valve member from the first position to the second position may be enhance by electromechanical means for increasing the regulation speed of the compression and rebound flow.

According to a second aspect of the present disclosure, there is provided a shock absorber comprising a valve arrangement as disclosed herein. This is advantageous for providing a shock absorber with all the advantages originating from a valve arrangement as disclose herein. When arranged with a shock absorber, the first restriction may act as a compression valve. The second restriction may act as a rebound valve. The flow resistance in the first and second flow path may advantageously be tuned for achieving desired compression and rebound damping characteristics.

According to a third aspect of the disclosure, there is provided a method for adjusting a damping fluid flow in a shock absorber. The method comprises providing S1 a valve arrangement as disclosed herein. The method further comprises compressing a shock absorber to expose the valve member to pressure so that the valve member moves in the first position such that the first restriction is open, thereby allowing a damping fluid flow through the valve arrangement via the first flow path, and so that the second restriction is closed, thereby preventing a damping fluid flow through the valve arrangement via the second flow path. The method optionally further comprises extending the shock absorber to expose the valve member to pressure so that the valve member moves into the second position such that the second restriction is open, thereby allowing a damping fluid flow through the valve arrangement via the second flow path, and the first restriction is closed thereby preventing a damping fluid flow through the valve arrangement via the first flow path. This provides for an efficient method for regulating damping fluid in a shock absorber. During the compression stroke, damping fluid may be enabled to flow through the first flow path while being blocked through the second flow path. During the rebound stroke, damping fluid is blocked through the first flow path and may be enabled to flow through the second flow path. The method is further advantageous when the shock absorber changes between compression stroke into a rebound stroke. When a piston of the shock absorber changes movement direction, the method provides for that the opening of the flow path is coupled to the closing of the second flow path, or vice versa. Thereby the valve arrangement may act as a coupled compression and rebound valve, which is advantageous for ensuring a smooth transitional movement of the piston when the shock absorber alternates between the compression stroke and rebound stroke.

According to a fourth aspect, a computer program is provided. The computer program comprises instructions which, when the program is executed by a computer, cause the computer to carry out the method according to the third aspect or any embodiments thereof.

According to a fifth aspect, a computer-readable storage medium is provided. The computer-readable storage medium comprises instructions which, when executed by a computer, cause the computer to carry out the method according to the third aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the disclosure relate to all possible combinations of features unless explicitly stated otherwise.

### BREIF DESCRIPTION OF THE DRAWINGS

The present disclosure is described in the following illustrative and nonlimiting detailed description of exemplary embodiments, with reference to the appended drawings, wherein:
Fig. 1 shows a cross-sectional side-view of a valve arrangement according to an embodiment of the disclosure;
Figs. 2a-2b show respective cross-sectional side-views of a valve arrangement according to an embodiment of the disclosure when the valve member is in the first position, the second position.
Fig. 3 shows a cross sectional side-view of a valve arrangement according to an embodiment of the disclosure and the equilibrium position;
Fig. 4 shows a cross-sectional side-view of a valve arrangement according to an embodiment of the disclosure;
Figs. 5a-5b show respective cross-sectional side-views of a valve arrangement according to an embodiment of the disclosure when the valve member is in the first position and the second position;
Fig. 6 shows a cross-sectional side-view a shock absorber provided with a valve arrangement according to one embodiment of the disclosure, wherein said valve arrangement is arranged internally of a piston of the shock absorber;
Fig. 7 shows a cross-sectional side-view a shock absorber provided with a valve arrangement according to one embodiment of the disclosure, wherein said valve arrangement is external to the shock absorber;
Fig. 8 shows a schematic flow chart of a method according to one embodiment of the disclosure.

### DESCRIPTION OF EMBODIMENTS

Hereinafter, the present disclosure in various aspects will be described with reference to the illustrative embodiments. All figures are schematic, not necessarily to scale, and generally only show parts which are necessary in order to elucidate the invention, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The following embodiments depicted in the figs. are provided as examples of potential implementations of the invention. It should be noted that the disclosed embodiments are not exhaustive and are presented for illustrative purposes only. Numerous variations and modifications are possible within the scope of the invention, and the figures should not be construed as limiting the invention to the specific embodiments depicted. It is further noted that the features of example embodiments in the following may be combined unless explicitly stated otherwise.

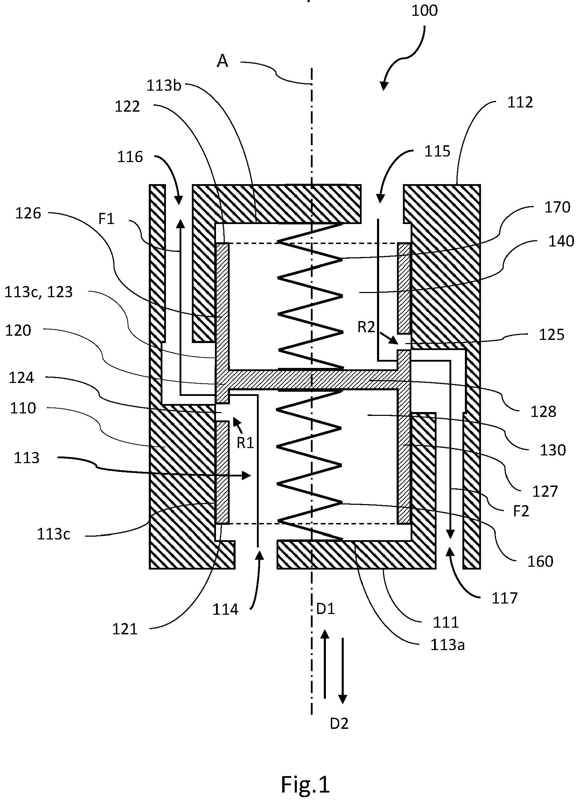

Fig. 1 shows a valve arrangement 100 for regulating damping fluid flow in a shock absorber. According to one embodiment, the valve arrangement 100 comprises: a valve body 110 providing a first inlet 114, a second inlet 115, a first outlet 116, and a second outlet 117. The valve arrangement 100 further comprises: a valve member 120 adapted to be moveable relative the valve body 110 between a first position and a second position; a first restriction R1 along a first flow path F1 connecting the first inlet 114 and the first outlet 116; a second restriction R2 along a second flow path F2 connecting the second inlet 115 and the second outlet 117. The valve arrangement 100 is adapted so when the valve member 120 is in the first position the first restriction R1 is open and the second restriction R2 is closed or biased to be closed, and when the valve member 120 is in the second position the second restriction R2 is open and the first restriction R1 is closed or biased to be closed.

As shown in Fig. 1 the valve body 110 may have a longitudinal extension along a center axis A of the valve body 110 from a first valve body end 111 to a second valve body end 112, wherein the second valve body end 112 is opposite the first valve body end 111. A first direction D1 may be exemplified as a direction from the first valve body end 111 towards the second valve body end 112, along the center axis A. A second direction D2 may be exemplified as an opposite direction to the first direction D1. The valve body 110 may provide a valve body chamber 113 located inside the valve body 110. The valve body chamber 113 may have a longitudinal extension along the center axis A, in the first direction D1, from a first valve body chamber end 113a to a second valve body chamber end 113b. The valve body chamber 113 may comprise a circumferential valve body chamber end 113c circumferentially extending around the center axis A. In the exemplified embodiment, the valve body 110 provides the first inlet 114 at the first valve body end 111 and the second inlet 115 at the second valve body end 112. The first inlet 114 extends from the first valve body end 111 to the first valve body chamber end 113a. The second inlet 115 extends from the second valve body end 112 to the second valve body chamber end 113b. Further, the valve body 110 provides the first outlet 116 at the second valve body end 112 and the second outlet 117 at the first valve body end 111. The first outlet 116 may extend from the second valve body end 112 to the circumferential valve body chamber end 113c. The second outlet 117 may extend from the first valve body end 111 to the circumferential valve body chamber end 113c. The valve member 120 may be arranged inside the valve body 110. The valve member 120 is movable in relation to the valve body 110 along the center axis A in the first direction D1 and second direction D2. The valve member 120 may have a longitudinal extension along the center axis A, in the first direction D1, from a first valve member end 121 to a second valve member end 122, wherein the second valve member end 122 is opposite the first valve member end 121. The valve member 120 may comprise a lateral valve member side 123 circumferentially extending around the center axis A. The circumferential extension in the horizontal direction of each of the first valve member end 121 and the second valve member end 122 is marked with dotted lines. The valve member 120 is movable in relation to the valve body 110 between the first position and the second position.

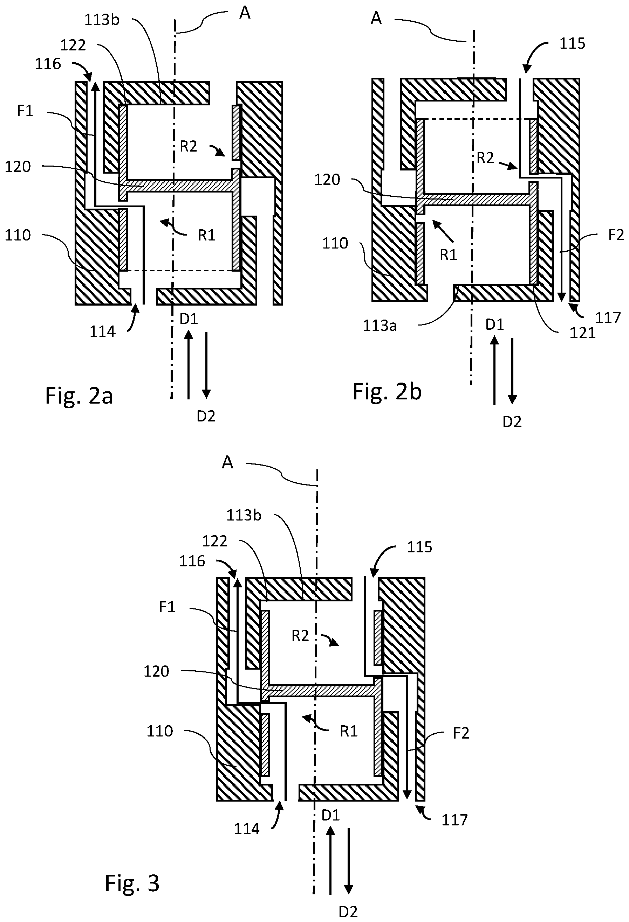

In Fig. 2a the valve member 120 is shown in the first position. When the valve member 120 is in the first position, the second valve member end 122 abuts against the second valve body chamber end 113b. Fig. 2a indicates the first flow path F1 according to one embodiment. In the exemplified embodiment, when the valve member 120 is in the first position, the first restriction R1 is open, and the second restriction R2 is closed. In Fig. 1 the valve member 120 is shown in an equilibrium position. The equilibrium position may be positioned between the first position and the second position. When the valve member 120 moves in the first direction D1 from the equilibrium position the first restriction R1 opens and the second restriction R2 is closed. When the valve member 120 moves in the second direction D2 from the equilibrium position the second restriction R2 opens and the first restriction R1 is closed.

In Fig. 2b the valve member 120 is shown in the second position. When the valve member 120 is in the second position, the first valve member end 121 abuts against the first valve body chamber end 113a. Fig. 2b indicates the second flow path F2 according to one embodiment. In the exemplified embodiment, when the valve member 120 is in the second position, the first restriction R1 is closed, and the second restriction R2 is open. The valve member 120 is movable in the first direction D1 relative the valve body 110, from the second position to the first position. The valve member 120 is movable in the second direction D2 relative the valve body 110, from the first position to the second position.

Now with reference to Fig. 1, the valve member 120 may comprise a first aperture 124. The first restriction R1 may be formed by an interaction between the first aperture 124 and first outlet 116. By moving the valve member 120 relative the valve body 110 in the first direction D1 into the first position, the first aperture 124 is adjusted in a position relative the first outlet 116 to adjust that the first restriction R1 is open. When the first restriction R1 is open, the first aperture 124 fluidly connects the first inlet 114 and the first outlet 116. The valve member 120 is moveable to the second position so that the first restriction R1 is closed, thereby closing the first flow path F1. The valve member 120 may comprise a second aperture 125. The second restriction R2 may be formed by the second aperture 125 and the second outlet 117. By moving the valve member 120 relative the valve body 110 in the second direction D2 into the second position, the second aperture 125 is adjusted in a position relative the second outlet 117 to adjust the second restriction R2 to be open. When the second restriction R2 is open, the second aperture 125 fluidly connects the second inlet 115 and the second outlet 117. The valve member 120 is moveable to the first position so that the second restriction R2 is closed, thereby closing the second flow path F2. The first and second aperture 124, 125, may be located on the lateral valve member side 123. The second aperture 125 is positioned such that it is fluidly disconnected from the second outlet 117 when the valve member 110 is in its first position. The second restriction R2 is thereby closing the second flow path F2 when the valve member 110 is in the first position. The first aperture 124 is positioned such that it is completely fluidly disconnected from the first outlet 116 when the valve member 120 is in its second position. The first restriction R1 is thereby closing the first flow path F1 when the valve member 110 is in its second position.

According to one embodiment, the valve member 120 is moveable relative the valve body 110 within a first range to increase a flow-through cross-section of the first restriction R1 when moving in the first direction D1 and reduce the flow-through cross-section of the first restriction R1 when moving in the second direction D2. Further, the valve member 120 is moveable within a second range to reduce a flow-through cross-section of the second restriction R2 when moving in the first direction D1 and increase the flow-through cross-section of the second restriction R2 when moving in the second direction D2. The valve member 120 is adapted such that it is movable within the first range to increase the flow-through cross-section of the first restriction R1 when moving in the first direction D1 and reduce the flow-through cross-section of the first restriction R1 when moving in a second direction D2. The first range may be defined as the movement range of the valve member 120 where the first aperture 124 has an intersectional cross area with the first outlet 116. The flow-through cross-section of the first restriction R1 may be interpreted as an intersecting flow-through cross-section of first aperture 124 and the first outlet 116. The valve member 120 is adapted such that it is movable within the second range to increase the flow-through cross-section of the second restriction R2 when moving in the second direction D2 and reduce the flow-through cross-section of the second restriction R2 when moving in the first direction D1. The second range may be defined as the movement range of the valve member 120 where the second aperture 125 has an intersectional cross area with the second outlet 117. The flow-through cross-section of the second restriction R2 may be interpreted as an intersecting flow-through cross-section of second aperture 125 and the second outlet 117.

According to one embodiment of the present disclosure, the valve member 120 is moveable in the first direction D1 and the second direction D2 at least in response to pressure. The valve member 120 is shaped such that it is exposable to fluid pressure from the first and second inlets 114, 115. Fluid pressure in the first inlet 114 may actuate the valve member 120 to move in the first direction D1 towards its first position. Fluid pressure in the second inlet 115 may actuate the valve member 120 to move in the second direction D2 towards its second position. The valve member 120 may be shaped such that it is equally affected from fluid pressure in first inlet 114 as fluid pressure in the second inlet 115. The valve member 120 may thereby move in response to fluid pressure from the first and second inlet 114, 115. If fluid pressure in the first inlet 114 affects the valve member 120 with a greater force than the fluid pressure in the second inlet 115, the valve member 120 will move from an equilibrium position, in the first range, and in the first direction D1 relative the valve body 110. The equilibrium position is between the first position and the second position. If, thereafter, fluid pressure in the second inlet 115 affect the valve member 120 with a greater force than the fluid pressure in the first inlet 114, the valve member 120 will move from the equilibrium position, in the second range, and in the second direction D2.

According to one embodiment, the valve member 120 comprises a first valve member portion 126 and a second valve member portion 127. When the valve member 120 is in the first position, the second valve member portion 127 is adapted to close the second restriction R2, and when the valve member 120 is in the second position, the first valve member portion 126 is adapted to close the first restriction R1. The first valve member portion 126 is a portion of the valve member 120 which closes the fluid connection between the first inlet 115 and the first outlet 116 when the valve member 120 is in the second position. The second valve member portion 127 is a portion of the valve member 120 which closes the fluid connection between the second inlet 116 and the second outlet 117 when the valve member 120 is in the first position.

According to one embodiment, the first valve member portion 126 and the second valve member portion 127 are fixedly coupled to each other by means of a coupling valve member portion 128. In the shown embodiment the valve member 120 is a solid part comprising the first valve member portion 126, the second valve member portion 127 and the coupling valve member portion 128. The coupling valve member portion 127 may extend perpendicularly to the center axis A.

According to one embodiment, the coupling valve member portion 128 is arranged to be in fluid connection to the first inlet 114 and the second inlet 115. The coupling valve member portion 128 may separate the valve body chamber 113 perpendicularly to the center axis A in a first chamber 130 and a second chamber 140. The coupling valve member portion 128 may be arranged between the first valve member end 121 and the second valve member end 122, optionally in the center between the first valve member end 121 and the second valve member end 122. The coupling valve member portion 128 may be rigid such that it may transfer fluid pressure force acting on the valve member 120 from the first inlet 114 and the second inlet 115 to the valve member 120 so to move the valve member 120 between the first position and the second position. Further, the first chamber 130 may fluidly connect the first inlet 114 and the first aperture 124. The second chamber 140 may fluidly connect the second inlet 115 and the second aperture 125. In the exemplified embodiment, the valve member 120 is adapted to move in the first direction D1 and in the second direction D2, between its first and second position in response to a pressure differential between fluid pressure in the first chamber 130 and the second chamber 140. When the valve member 120 moves from the first position into the second position, the first chamber 130 may compress. This may be due to the valve member D1 moving in the second direction D2 relative the valve body 110. The space between the between the valve member 120, the first valve body chamber end 113a, and the circumferential valve chamber side 113c may thereby compress. When the valve member 120 moves from the second position into the first position, the first chamber may expand. The expansion of the first chamber 130 may be caused by the valve member 120 moving in the first direction D1 relative the first valve body 110. The space between the between the valve member 120, the first valve body chamber end 113a, and the circumferential valve chamber side 113c may thereby expand.

According to one embodiment of the present disclosure, one or more springs 160, 170 for returning the valve member 120 from the first or second position to an equilibrium position. In the exemplified embodiment, the first spring 160 extends from the valve body 110 to the valve member 120. The first spring may extend from the first valve body chamber end 113a to the coupling valve member portion 128. The valve arrangement 100 comprises a second spring 170 which extend from the valve body 110 to the valve member 120. The second spring 170 may extend from the second valve body chamber end 113b to the coupling valve member portion 128. The first spring 160 may have a first spring coefficient that is equal or different as a second spring coefficient of the second spring 170. The springs may be mechanical or hydraulic. Any of the one or more springs may be hydraulic springs or mechanical springs such as coil or compression springs. Each of the one or more springs may only act in part of the movement range of the valve member 120. Alternatively, each of the one or more springs may only act in one of the first direction D1 and the second direction D2. When the fluid pressure differential between the first inlet 114 and the second inlet 115 is zero, or substantially close to zero, the valve member 120 may be equally affected from the fluid pressure from the first inlet 114 and the second inlet 115. The valve member 120 may then move into the equilibrium position. In the exemplified embodiment, the first spring 160 and the second spring 170 are configured to affect the valve member 120 such that the equilibrium position is between the first and second position, optionally in the middle between the first and second position. The equilibrium position may be closer to the first or the second position. The valve member 120 may be pretensioned in the equilibrium position by the first spring 160 and the second spring 170.

According to one embodiment of the present disclosure, the valve member 120 is adapted as a sleeve axially moveable relative the valve body, and the first and second restrictions R1, R2 are formed by a first and second aperture 124, 125 for fluidly connecting to the first and second outlet 116, 117.

With reference to Fig. 3, according to one embodiment of the present disclosure, the first range and the second range overlaps so that for an overlapping range, respective flow-through cross-sections of the respective first and second restrictions R1, R2 are open. In the exemplified embodiment, the first and second range partly overlap. This is shown in Fig. 3 where the valve member 120 is shown in the equilibrium position. In this specific embodiment, when the valve member 120 is in the equilibrium position, the first and second apertures 124, 125 each have an intersecting cross area with the first and second outlets 116, 117, respectively. As shown by the arrows, when the valve member 120 is in the equilibrium position, the first and second flow paths F1, F2, are simultaneously open.

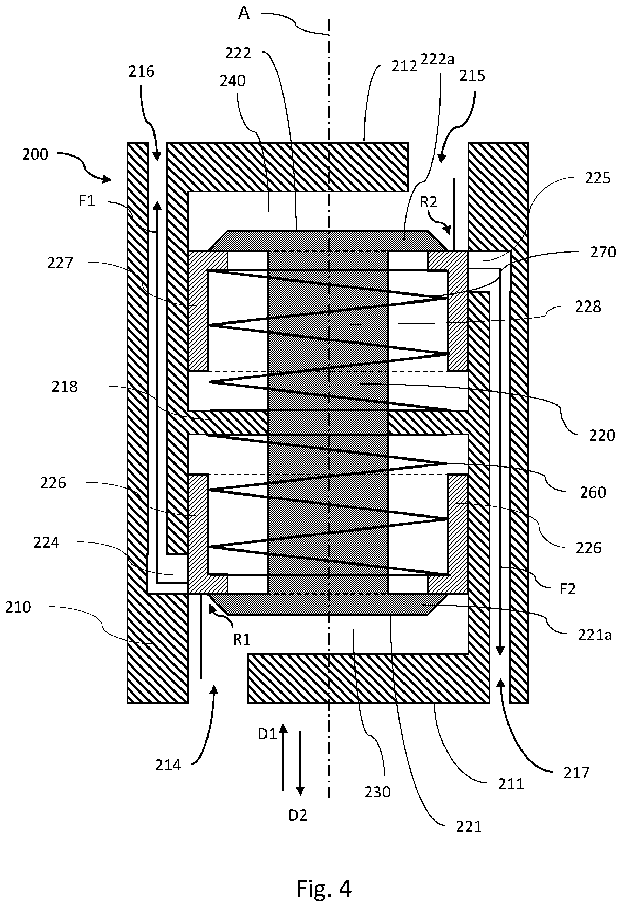

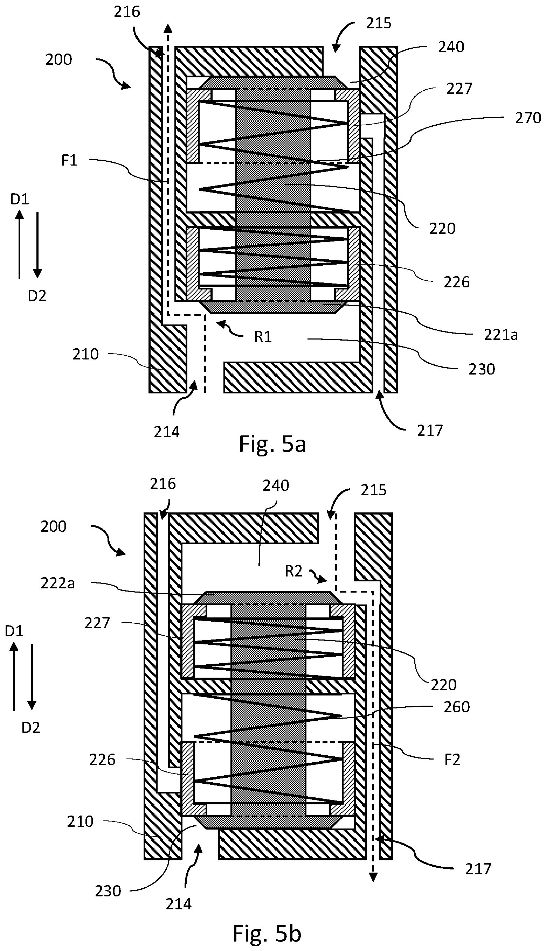

Now with reference to Fig. 4, a second embodiment of a valve arrangement 200 for regulating damping fluid flow in a shock absorber is shown. The valve arrangement 200 comprises a valve body 210 providing a first inlet 214, a second inlet 215, a first outlet 216, and a second outlet 217. The valve arrangement 200 further comprises a valve member 220 adapted to be moveable relative the valve body 210 between a first position and a second position. The valve arrangement 200 further comprises a first restriction R1 along a first flow path F1 connecting the first inlet 214 and the first outlet 216, and a second restriction R2 along a second flow path F2 connecting the second inlet 215 and the second outlet 217. The valve arrangement 200 is adapted so when the valve member 220 is in the first position the first restriction R1 is open and the second restriction R2 is closed or biased to be closed, and when the valve member 220 is in the second position the second restriction R2 is open and the first restriction R1 is closed or biased to be closed. The valve body 210 may have a longitudinal extension along a center axis A of the valve body 210 from a first valve body end 211 to a second valve body end 212, wherein the second valve body end 212 is opposite the first valve body end 211. A first direction D1 may be exemplified as a direction from the first valve body end 211 towards the second valve body end 212, along the center axis A. A second direction D2 may be exemplified as an opposite direction to the first direction D1. The valve body 210 may provide a first chamber 230 and a second chamber 240 located inside the valve body 210. The first chamber 230 and the second chamber 240 are separated by a valve body partitioning portion 218 and the valve member 220. The valve body 210 provides the first inlet 214 at the first valve body end 211 and the second inlet 215 at the second valve body end 212. The first inlet 214 extends from the first valve body end 211 to the first chamber 230. The second inlet 215 extends from the second valve body end 212 to the second chamber 240. Further, the valve body 210 provides the first outlet 216 at the second valve body end 212 and the second outlet 217 at the first valve body end 211. The first outlet 216 may extend from the second valve body end 212 to the first chamber 230. The first outlet 216 may comprise a first aperture 224. The second outlet 217 may extend from the first valve body end 211 to the second chamber 240. The second outlet 217 may comprise a second aperture 225. The valve member 220 may be located inside the valve body 210. The valve member 220 is movable in relation to the valve body 210 along the center axis A in the first direction D1 and in the second direction D2 between a first position and a second position. The valve member 220 is showed in the first position in Fig. 5a and in the second position in Fig. 5b. The valve member 220 may have a longitudinal extension along the center axis A, in the first direction D1, from a first valve member end 221 to a second valve member end 222. The valve member 220 further comprises a first protruding portion 221a which extends perpendicular away from the center axis A at the first valve member end 221 and a second protruding portion 222a which extends perpendicular away from the center axis A at the second valve member end 222. The valve member 220 further comprises a coupling valve member portion 228 which extends along the center axis A from the first valve member end 221 to the second valve member end 222. The valve member 220 further comprises a first valve member portion 226 and a second valve member portion 227. Each of the first valve member portion 226 and the second valve member portion 227 circumferentially extends around the center axis A. The circumferential extension in the horizontal direction of each of the first valve member portion 226 and the second valve member portion 227 is marked with dotted lines in Fig. 4. Each of the first valve member portion 226 and the second valve member portion 227 are movable relative the valve body 210 along the center axis A in the first direction D1 and the second direction D2. The first protruding portion 221a engage towards the first valve member portion 226 so to prevent it from moving past the first protruding portion 221a in the second direction D2. The second protruding portion 222a engage towards the second valve member portion 227 so to prevent it from moving past the second protruding portion 222a in the first direction D1. The valve member 220 is shown in an equilibrium position. The equilibrium position may be positioned between the first position and the second position.

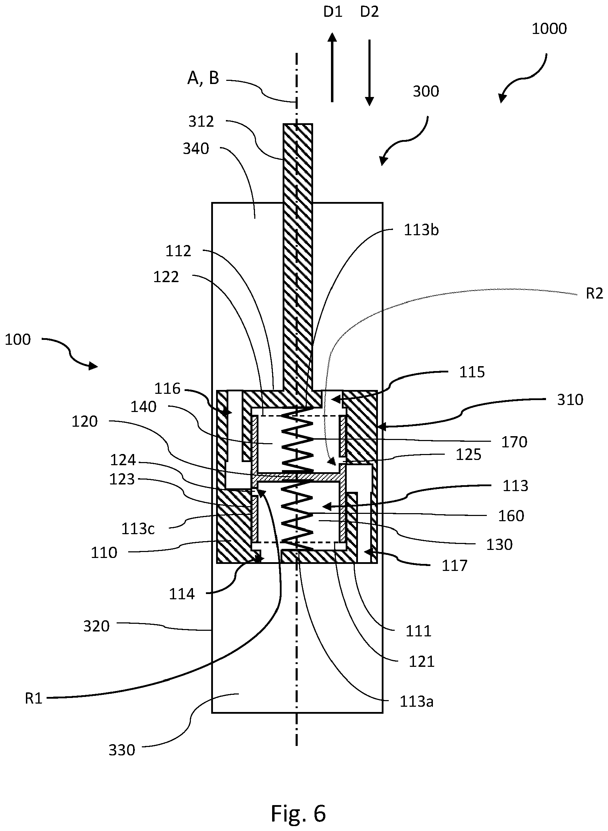

According to one embodiment of the valve arrangement 200 the first valve member portion 226 and the second valve member portion 227 are movable relative each other and relative a coupling valve member portion 228. The first valve member portion 226 is movable relative the valve member 220. The second valve member portion 227 is movable relative the valve member 220. The valve arrangement 200 further comprises a first spring 260 and a second spring 270. The first spring 260 extends from the valve body partitioning portion 218 to the first valve member portion 226 so to apply pressure on the first valve member portion 226 in the second direction D2. The second spring 270 extends from the valve body partitioning portion 218 to the second valve member portion 227 so to apply pressure on the second valve member portion 227 in the first direction D1. In Fig. 5a, the valve member 220 is shown in the first position. Fig. 5a indicates the first flow path F1. When the valve member 220 is exposed to a first pressure differential where fluid pressure is larger in the first chamber 230 than in the second chamber 240, the valve member 220 may move into the first position. When the valve member 220 moves into first position, the first protruding portion 221a engage the first valve member portion 226 to move in the first direction D1 and thereby fluidly connect the first inlet 214 to the first outlet 216. The second spring 270 biases the second valve member portion 227 to move in the first direction D1 to fluidly disconnect the second inlet 215 from the second outlet 217. In Fig. 5b, the valve member 220 is shown in the second position. Fig. 5b indicates a second flow path F2 according to one embodiment. When the valve member 220 is exposed to a second pressure differential where fluid pressure is larger in the second chamber 240 than in the first chamber 230, the valve member 220 moves into the second position. When the valve member 220 is moves into the second position, the second protruding portion 222a engage the second valve member portion 227 to move in the second direction D2 and thereby fluidly connect the second inlet 215 to the second outlet 217. The first spring 260 biases the first valve member portion 226 to move in the second direction D2 to fluidly disconnect the first inlet 214 and the first outlet 216. Fig. 6 shows a shock absorber 300 comprising a piston 310, a piston rod 312, a cylinder tube 320 providing a compression chamber 330 and a rebound chamber 340. According to one embodiment of the present disclosure, the valve arrangement 100 is adapted to be arranged in the piston 310 of the shock absorber 300. The valve arrangement 100 is arranged in the piston 310 such that the first inlet 114 and the second outlet 117 are fluidly connectable to the compression chamber 330 on a first side of the piston 310. Further, the second inlet 115 and the first outlet 116 are fluidly connectable to the rebound chamber 340 on a second side of the piston 310.

According to one embodiment of the present disclosure, the valve member 120 is adapted to move relative the valve body 110 in response to a pressure differential between hydraulic fluid in a compression chamber 330 of a shock absorber 300 and hydraulic fluid in a rebound chamber 340 of a shock absorber 300. As shown in Fig. 6, the first inlet 114 and the second outlet 117 are fluidly connected to a compression chamber 330 of the shock absorber 300 and the second inlet 115 and the first outlet 116 are fluidly connected to a rebound chamber 340 of the shock absorber 300. The valve arrangement 100 is thus adapted to be exposed to a fluid pressure differential between the compression chamber 330 and the rebound chamber 340. During a compression stroke, when fluid pressure in the compression chamber 330 is greater than fluid pressure in the rebound chamber 340, the valve arrangement 100 will be exposed to a first pressure differential between the first inlet 115 and the second inlet, which moves the valve member 120 in the first direction D1 relative the valve body 110 into the first position so that the first restriction R1 is open and the second restriction R2 is closed. The valve arrangement 100 may thereby fluidly connect the compression chamber 330 and the rebound chamber 340 via the first flow path. During a rebound stroke, when fluid pressure in the rebound chamber 340 is greater than fluid pressure in the compression chamber 330, the valve arrangement 100 will be exposed to a second pressure differential between the first inlet 115 and the second inlet 116, moving the valve member 120 in the second direction D2 towards the second position so that the second restriction R2 is open the first restriction R1 is closed. The valve arrangement 100 thereby fluidly connect the rebound chamber and the compression chamber via the second flow path. The first pressure differential may refer to when fluid pressure in the first inlet 114 is larger than fluid pressure in the second inlet 115. The second pressure differential may refer to when fluid pressure in the second inlet 115 is larger than fluid pressure in the first inlet 114. In the exemplified embodiment, the valve member 120 is pretensioned into the equilibrium position by the first spring 160, and the second spring 170. In the beginning of the compression stroke the piston 310 accelerates in the second direction D2 relative the cylinder tube 320. As the velocity of the piston 310 increases, so is also the magnitude of the first pressure differential between the first and second inlets 114, 115. The first pressure differential will thereby increasingly overcome the pre-tensioning force of the first and second springs 160, 170, thus increasingly move the valve member 120 from the equilibrium position towards the first position, and increasingly open the first restriction R1. At the end of the compression stroke, the velocity of the piston 310 will decrease, and so also the magnitude of the first pressure differential. Thereby, the first pressure differential will increasingly be overcome by the pre-tensioning force of the first spring 160 and the second spring 170. The valve member 120 will as a result move from the first position towards the equilibrium position, reducing the flow through cross section of the first restriction R1 at the end of the compression stroke. In the beginning of the rebound stroke, the velocity of the piston 310 increases in the opposite direction as during the compression stroke. Along with acceleration of the piston 310 in the first direction D1 relative the cylinder tube 320, the magnitude of the second pressure differential between the first and second inlets 114, 115, increase. The second pressure differential will thereby increasingly overcome the pre-tensioning force of the first and second springs 160, 170, thus increasingly move the valve member 120 from the equilibrium position towards the second position, and increasingly open the second restriction R2. At the end of the rebound stroke, the velocity of the piston 310 will decrease, and so also the magnitude of the second pressure differential. Thereby, the second pressure differential will increasingly be overcome by the pre-tensioning force of the first and second springs 160, 170. The valve member 120 will as a result move from the second position towards the equilibrium position, reducing the flow through cross section of the second restriction R2 at the end of the rebound stroke.

According to one embodiment of the present disclosure, the valve member 120 is adapted to be further controllable by a control signal.

According to one embodiment of the present disclosure, a shock absorber 300 comprises a valve arrangement 100 as disclosed herein. As showed in Fig. 6 the valve arrangement 100 is arranged in a system 1000 comprising the shock absorber 300 and the valve arrangement 100. The shock absorber 300 may comprise the piston 310 and a cylinder tube 320 comprising a compression chamber 330 and a rebound chamber 340. The piston 310 may be adapted to move along a longitudinal axis B of the cylinder tube 320. The piston 310 may separate the compression chamber 330 from the rebound chamber 340. In the exemplified embodiment, the valve arrangement 100 is arranged inside the piston 310 such that the center axis A of the valve body 110 align with the axis B of the cylinder tube 320. The first valve body end 111 may correspond to a first side of the piston directed towards the compression chamber 330 such that the first inlet 114 and the second outlet 117 are fluidly connected to the compression chamber 330. Further, the second valve body end 112 may correspond to a second side of the piston directed towards the rebound chamber 340 such that the second inlet 115 and the first outlet 116 are fluidly connected to the rebound chamber 340. During a compression stroke of the shock absorber 300, the piston 310 moves along the longitudinal axis B in the second direction D2 relative the cylinder tube 320, compressing the compression chamber 330 and expanding the rebound chamber 340. During the compression stroke, damping fluid pressure becomes higher in the compression chamber 330 than in the rebound chamber 340. Damping fluid pressure in the first inlet 114 will therefore be higher than damping fluid in the second inlet 115, causing the valve member 120 to move in the first direction D1 relative the valve body 110 towards its first position. The valve member 120 may move in the first direction D1 in the second range adjusting the second restriction R2 to close the second flow path F2 between the rebound chamber 340 and the compression chamber 330. The valve member 120 may move in the first direction D1 in the first range adjusting the first restriction R1 to open the first flow path F1 between the compression chamber 330 to the rebound chamber. When the shock absorber 300 transitions to a rebound stroke, the piston 310 changes its movement direction and moves in the first direction D1 relative the cylinder tube 320 and thereby compresses the rebound chamber 340. The damping fluid pressure in the second inlet 115 will increase and become higher than the damping fluid pressure in the first inlet 114. This will cause the valve member 120 to move in the second direction D2 relative the valve body 110 towards its second position. The valve member 120 may move in the second direction D2 in the first range adjusting the first restriction R1 to close the first flow path F1. The valve member 120 may move in the second direction D2 in the second range adjusting the second restriction R2 to open the second flow path F2. In the shown embodiment, the valve member 120 passes the equilibrium position when moving from the first position towards the second position. When the rebound stroke has transitioned back to a second compression stroke, the piston 310 moves in the first direction D1 relative the cylinder tube 320 and damping fluid pressure becomes higher in the compression chamber than in the rebound chamber 240, which causes the valve member 120 to move, via the equilibrium position, back to towards its first position.

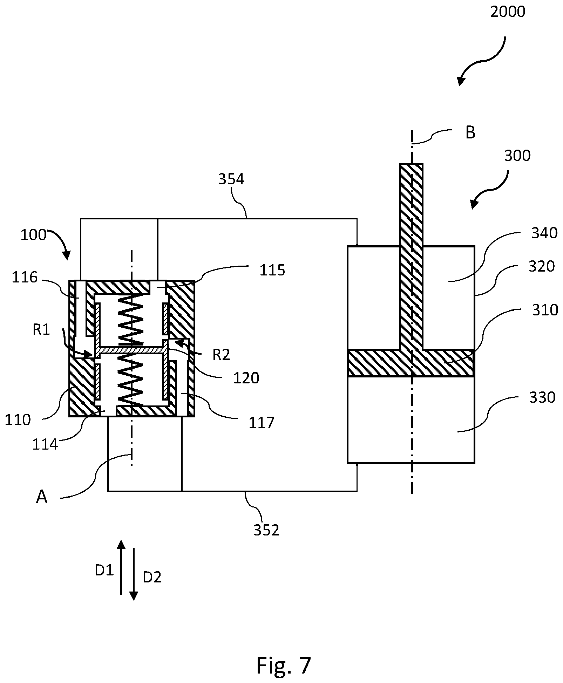

With reference to Fig. 7, a second embodiment of a system 2000 comprising the shock absorber 300 and the valve arrangement 100, is shown. The shock absorber 300 comprises a piston 310 and a cylinder tube 320 comprising a compression chamber 330 and a rebound chamber 340. The cylinder tube 320 has a longitudinal extension along an axis B. The piston 310 is adapted to move inside the cylinder tube 320 along the axis B. The piston 310 separates the compression chamber 330 from the rebound chamber 340. In the exemplified embodiment, the valve arrangement 100 is arranged such that it is positioned externally of the piston 310, the compression chamber 330, and the rebound chamber 340. The first inlet 114 may via a first connection element 252 be fluidly connected to the compression chamber 330. The second inlet 115 may via a second connection element 254 be fluidly connected to the rebound chamber 340. The first outlet 116 may via the second connection element 254 be fluidly connected to the rebound chamber 340. The second outlet 117 may via the first connection element 252 be fluidly connected to the compression chamber 330. Any of the first or second connection element may be an element for guiding damping fluid from one port to another port, such as a pipe, a tube, or the like. In the exemplified embodiment, during a compression stroke of the shock absorber 300, the piston 310 moves along the axis B towards the compression chamber 330 for compressing the compression chamber 330 and expanding the rebound chamber 340. Fluid pressure in the compression chamber 330 becomes higher than fluid pressure in the rebound chamber 340. Thereby, a first pressure differential is generated between the first inlet 114 and the second inlet 115 leading to that the valve member 120 moves in the first direction D1 relative the valve body 110 towards the first position. When the valve member 120 is in the first position the first restriction R1 opens the first flow path and the second restriction R2 closes the second flow path. Fluid is thereby enabled to flow from the compression chamber 330 to the rebound chamber 340 via the first flow path of the valve arrangement 100. During a rebound stroke of the shock absorber 300, the piston 310 moves along the axis B towards the rebound chamber for compressing the rebound chamber 340 and expanding the compression chamber 330. Fluid pressure in the rebound chamber 340 becomes higher than in the compression chamber 330. Thereby, a second pressure differential is generated between the first inlet 114 and the second inlet 115 leading to that the valve member 120 moves in the second direction D2, relative the valve body 110, towards its second position. When the valve member 120 is in the second position the first restriction R1 closes the first flow path and the second restriction R2 opens the second flow path. Fluid is thereby enabled to flow from the rebound chamber 340 to the compression chamber 330 via the second flow path of the valve arrangement 100.

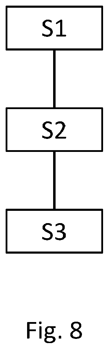

With reference to Fig. 8, there is provided a method for adjusting a damping fluid flow in a shock absorber 300. The method comprises providing S1 a valve arrangement as disclosed herein. The method further comprises compressing S2 a shock absorber to expose the valve member 120, 220 to pressure so that the valve member 120, 220 moves in the first position such that the first restriction R1 is open, thereby allowing a damping fluid flow through the valve arrangement 100 via the first flow path F1, and so that the second restriction R2 is closed, thereby preventing a damping fluid flow through the valve arrangement 100, 200 via the second flow path F2. The method optionally further comprises extending S3 the shock absorber to expose the valve member 120, 220 to pressure so that the valve member 120 moves into the second position such that the second restriction R2 is open, thereby allowing a damping fluid flow through the valve arrangement 100, 200 via the second flow path F2, and the first restriction R1 is closed thereby preventing a damping fluid flow through the valve arrangement 100, 200 via the first flow path F1.

The valve arrangement 100 by which the method adjusts a damping fluid flow may be further adapted with any features of the valve arrangement 100 according to the first aspect or any embodiments thereof. In the drawings and specification, there have been disclosed preferred embodiments and examples of the present disclosure and, although specific terms are employed, they are used in a generic and descriptive sense only and not for the purpose of limitation, the scope of the present disclosure being set forth in the following claims.

## Claims

1. A valve arrangement (100, 200) for regulating damping fluid flow in a shock absorber, comprising:
a valve body (110, 210) providing a first inlet (114, 214), a second inlet (115, 215), a first outlet (116, 216), and a second outlet (117, 217);
a valve member (120, 220) adapted to be moveable relative the valve body (110, 210) between a first position and a second position;
a first restriction (R1) along a first flow path (F1) connecting the first inlet (114, 214) and the first outlet (116, 216);
a second restriction (R2) along a second flow path (F2) connecting the second inlet (115, 215) and the second outlet (117, 217),
wherein
the valve arrangement (100, 200) is adapted so
when the valve member (120, 220) is in the first position the first restriction (R1) is open and the second restriction (R2) is closed or biased to be closed or biased to be closed, and
when the valve member (120, 220) is in the second position the second restriction (R2) is open and the first restriction (R1) is closed or biased to be closed or biased to be closed.

2. The valve arrangement (100, 200) according to claim 1, wherein
the valve member (120, 220) is moveable relative the valve body (110, 210) within a first range to increase a flow-through cross-section of the first restriction (R1) when moving in a first direction (D1) and reduce the flow-through cross-section of the first restriction (R1) when moving in a second direction (D2), and
the valve member (120, 220) is moveable within a second range to reduce a flow-through cross-section of the second restriction (R2) when moving in the first direction (D1) and increase the flow-through cross-section of the second restriction (R2) when moving in the second direction (D2).

3. The valve arrangement (100, 200) according to claim 2, wherein the first range and the second range overlaps so that for an overlapping range, respective flow-through cross-sections of the respective first and second restrictions (R1, R2) are open.

4. The valve arrangement (100, 200), according to any preceding claim, wherein the valve member (120, 220) is moveable in the first direction (D1) and the second direction (D2) at least in response to pressure.

5. The valve arrangement (100, 200) according to any preceding claim, wherein the valve member (120, 220) is adapted to move relative the valve body (110, 210) in response to a pressure differential between hydraulic fluid in a compression chamber (330) of a shock absorber (300) and hydraulic fluid in a rebound chamber (340) of a shock absorber (300).

6. The valve arrangement (100, 200) according to any preceding claim, wherein the valve member (120, 220) comprises;
a first valve member portion (126, 226);
a second valve member portion (127, 227),
wherein when the valve member (120, 220) is in the first position, the second valve member portion (127, 227) is adapted to close the second restriction (R2), and
when the valve member (120, 220) is in the second position, the first valve member portion (126, 226) is adapted to close the first restriction (R1).

7. The valve arrangement (100) according to claim 6, wherein the first valve member portion (126) and the second valve member portion (127) are fixedly coupled to each other by means of a coupling valve member portion (128).

8. The valve arrangement (200) according to claim 6, wherein the first valve member portion (226) and the second valve member portion (227) are movable relative each other and relative a coupling valve member portion (228).

9. The valve arrangement (100, 200) according to any of claims 6-8, wherein the coupling valve member portion (128, 228) is arranged to be in fluid connection to the first inlet (114, 214) and the second inlet (115, 215).

10. The valve arrangement (100, 200) according to any preceding claim, comprising one or more springs (160, 170, 260, 270) for returning the valve member (120, 220) from the first or second position to an equilibrium position.

11. The valve arrangement (100, 200) according to any preceding claim, wherein the valve member (120, 220) is adapted as a sleeve axially moveable relative the valve body (110, 210), and the first and second restrictions (R1, R2) are formed by a first and second aperture (124, 125, 224, 225) for fluidly connecting to the first and second outlet (114, 115, 214, 215).

12. The valve arrangement (100, 200) according to any preceding claim, adapted to be arranged in a piston (310) of a shock absorber (300).

13. The valve arrangement (100, 200) according to any preceding claim, wherein the valve member (120, 220) is adapted to be further controllable by a control signal.

14. A shock absorber (300) comprising a valve arrangement (100, 200) according to any preceding claim.

15. Method for adjusting a damping fluid flow in a shock absorber (300), the method comprising the steps of:
i. providing (S1) a valve arrangement (100, 200) according to any one of claims 1-13;
ii. compressing (S2) a shock absorber to expose the valve member (120, 220) to pressure so that the valve member (120, 220) moves in the first position such that:
- the first restriction (R1) is open, thereby allowing a damping fluid flow through the valve arrangement (100, 200) via the first flow path (F1), and
- the second restriction (R2) is closed, thereby preventing a damping fluid flow through the valve arrangement (100, 200) via the second flow path (F2), and/or
iii. extending (S3) the shock absorber to expose the valve member (120, 220) to pressure so that the valve member (120, 220) moves into the second position such that:
- the second restriction (R2) is open, thereby allowing a damping fluid flow through the valve arrangement (100, 200) via the second flow path (F2), and
- the first restriction (R1) is closed thereby preventing a damping fluid flow through the valve arrangement (100, 200) via the first flow path (F1).
